Europäisches Patentamt

European Patent Office

Office européen des brevets

(11) Veröffentlichungsnummer: **0 341 524**
**A1**

## (12) EUROPÄISCHE PATENTANMELDUNG

(21) Anmeldenummer: 89107835.4

(22) Anmeldetag: 29.04.89

(51) Int. Cl.⁴: **G06K 17/00 , B42B 7/00 , B65H 37/04**

(30) Priorität: **11.05.88 CH 1799/88**

(43) Veröffentlichungstag der Anmeldung:
**15.11.89 Patentblatt 89/46**

(84) Benannte Vertragsstaaten:
**CH DE GB IT LI**

(71) Anmelder: **Jos. Hunkeler AG Fabrik für
graphische Maschinen
Bahnhofstrasse 252
CH-4806 Wikon(CH)**

(72) Erfinder: **Felix, Willi
Einsiegelweg 3
CH-4802 Strengelbach(DE)**

(74) Vertreter: **Patentanwälte Schaad, Balass &
Partner
Dufourstrasse 101 Postfach
CH-8034 Zürich(CH)**

(54) Verfahren und Vorrichtung zum Bereitstellen von personenbezogenen Versandeinheiten mit mindestens zwei Erzeugnissen.

(57) Zum Bereitstellen von personenbezogenen Versandeinheiten (36) werden von einem Begleitbrief (18a) mit einer Kamera (20) einem Empfänger zugeordnete Informationen (22) abgelesen und einer Steuereinheit zugeführt. In dieser Steuereinheit, in welcher eine Vielzahl von Daten gespeichert sind, werden aufgrund der gelesenen Informationen (22) aus dem gespeicherten Datenvorrat personenbezogene Einzeldaten (34) herausgesucht. Mittels eines Tintenstrahldruckers (33) werden diese Einzeldaten (34) auf eine Kredit- oder Identifikationskarte (32) gedruckt, die lösbar auf dem Begleitbrief (18c) aufgeklebt ist.

Fig.1

# Verfahren und Vorrichtung zum Bereitstellen von personenbezogenen Versandeinheiten mit mindestens zwei Erzeugnissen

Die vorliegende Erfindung betrifft ein Verfahren bzw. eine Vorrichtung zum Bereitstellen von personenbezogenen Versandeinheiten, die wenigstens zwei unterschiedliche, mit mindestens zum Teil voneinander abweichenden Informationen versehene, Erzeugnisse, insbesondere einen Begleitbrief und eine Beilage, aufweisen.

Es kommt häufig vor, dass ein Begleitbrief zusammen mit einer Beilage, auf welcher personenbezogene Einzeldaten gedruckt sind, wie z.B. Kredit- oder Identitätskarten, einem Empfänger zugestellt werden müssen. Ueblicherweise werden der Begleitbrief und die Beilage getrennt voneinander gedruckt und unter der Kontrolle, ob auf ihnen aufgedruckte, auf den Empfänger bezogene Informationen miteinander übereinstimmen, zusammengeführt und miteinander zum Versand bereitgestellt. Dieses bekannte Vorgehen ist aufwendig.

Es ist Aufgabe der vorliegenden Erfindung, eine Verfahren und eine Vorrichtung zum Bereitstellen von personenbezogenen Versandeinheiten, die wenigstens zwei unterschiedliche, mit mindestens zum Teil voneinander abweichenden Informationen versehene Erzeugnisse aufweisen, vorzuschlagen, welches bzw. welche auf keinen Vergleich der Informationen auf beiden Erzeugnissen angewiesen ist und trotzdem eine fehlerfreie Verarbeitung der Erzeugnisse ermöglicht.

Diese Aufgabe wird durch die Merkmale der Ansprüche 1 und 12 gelöst.

Von einem ersten Erzeugnis, beispielsweise einem Begleitbrief oder einer Kredit- oder Identifikationskarte, werden einem Empfänger zugeordnete Informationen abgelesen. In einer Steuereinheit ist eine Vielzahl von Daten gespeichert, aus welchen mittels dieser Informationen personenbezogene Einzeldaten, die bezüglich Informationsgehalt mit den von ersten Erzeugnis gelesenen Informationen nicht identisch sind, abrufbar sind. Dazu werden die vom ersten Erzeugnis abgelesenen Informationen in der Steuereinheit weiterverarbeitet und zum Bestimmen dieser personenbezogenen Einzeldaten verwendet. Nun wird das zweite Erzeugnis, beispielsweise eine Kredit- oder Identitätskarte bzw. ein Begleitbrief, mit diesen, ebenfalls dem Empfänger zugeordneten, Einzeldaten bedruckt, und die beiden Erzeugnisse werden miteinander zum Versand bereitgestellt. Die beiden Erzeugnisse können sich beispielsweise nicht nur in der aufgedruckten Information, sondern auch in ihrem Format, im Erscheinungsbild, der Papierqualität usw. unterscheiden. Die personenbezogenen Einzeldaten enthalten empfängerspezifische Informationen, welche eine Einzelperson oder eine juristische Person betreffen können.

In bevorzugter Weise werden die beiden Erzeugnisse lösbar miteinander verbunden, so dass diese später voneinander getrennt und mindestens das eine Erzeugnis getrennt vom anderen weiterverwendet werden kann.

Weitere bevorzugte Ausbildungsformen des Verfahrens bzw. der Vorrichtung sind in den weiteren abhängigen Ansprüchen angegeben.

Die vorliegende Erfindung wird nun anhand eines in den Figuren dargestellten Ausführungsbeispieles näher beschrieben. Es zeigen rein schematisch:

Fig. 1 und 2 in Seitenansicht und vereinfacht in Draufsicht eine Bereitstellvorrichtung zum Bereitstellen einer Versandeinheit aus einer Karte und einem Begleitbrief, und

Fig. 3 ein Blockschaltbild der Steuereinheit der Bereitstellvorrichtung.

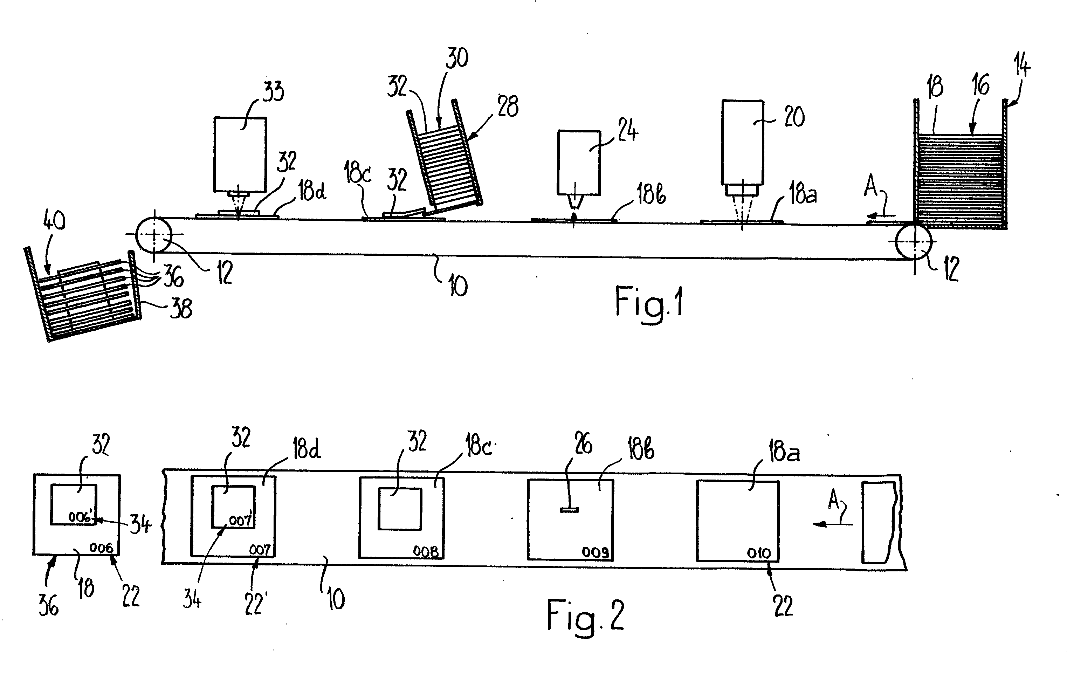

Fig. 1 zeigt in Seitenansicht und Fig. 2 in Draufsicht ein Förderband 10, welches in Pfeilrichtung A umlaufend angetrieben ist. Am Anfang und am Ende der förderwirksamen Strecke ist das Förderband 10 in bekannter Art und Weise um ortsfest drehbar gelagerte Walzen 12 geführt. Am Anfang der förderwirksamen Strecke des Förderbandes 10 ist eine erste Zuführstation 14 mit einem Stapel 16 von Begleitbriefen 18 vorgesehen, die mindestens teilweise mit empfängerspezifischen Informationen bedruckt sind. Die Zuführstation 14 legt in vorbestimmten Abständen jeweils den untersten Begleitbrief 18 des Stapels 16 auf das in Förderrichtung A umlaufende Förderband 10.

In Pfeilrichtung A gesehen ist der ersten Zuführstation 14 eine Kamera 20 nachgeschaltet, welche vom mit 18a bezeichneten Begleitbrief eine auf diesen aufgedruckte, personenbezogene Information, z.B. eine Referenznummer 22, abliest.

Der Kamera 20 ist eine Klebstoffauftrageinrichtung 24 nachgeschaltet, welche auf dem mit 18b bezeichneten Begleitbrief einen Streifen 26 aus Klebstoff anbringt.

Der Klebstoffauftrageinrichtung 24 ist eine zweite Zuführstation 28 mit einem Stapel 30 von neutralen, allenfalls bereits mit allgemeinen Informationen versehenen Karten 32, beispielsweise Identifikations- oder Kreditkarten aus Kunststoff, nachgeschaltet. Die Zuführstation 28 zieht vom Stapel 30 eine Karte 32 ab und legt diese auf den mit 18c bezeichneten Begleitbrief im Bereich des vorgängig darauf aufgebrachten Streifens 26 aus Klebstoff. Dem zweiten Anleger 28 ist ein Tintenstrahldrucker 33 nachgeschaltet, welcher auf die, auf den mit 18d bezeichneten Begleitbrief angeklebte Karte 32 der Referenznummer 22' des Begleitbriefs 18d (007), entsprechende, ebenfalls empfängerspezifische Einzeldaten 34, (in der Figur 2 mit 007' bezeichnet) aufdruckt. Die so gebildeten Versandeinheiten 36 aus einem Begleitbrief 18 und einer darauf lösbar aufgeklebten Karte 32, auf welcher der Referenznummer 22 entsprechende Einzeldaten 34 aufgedruckt sind, werden vom Förderband 10 einem Sammeltrog 38 zur Bildung eines Stapels 40 übergeben.

Die Einzeldaten 34, welche auf die Karte 32 aufgedruckt werden, unterscheiden sich hinsichtlich Informationsgehalt ganz oder zum Teil von den vom zugeordneten Begleitbrief 18 gelesenen Informationen 22. Diese Einzeldaten 34 beinhalten beispielsweise den Namen und die Anschrift und eventuell weitere personenbezogene Angaben, wie die Kredit- bzw. Kontonummer des Karteninhabers und allenfalls auch die auf dem Begleitbrief 18 aufgedruckte Referenznummer 22. Wie bereits erwähnt, unterscheiden sich somit eine, mehrere oder alle dieser Angaben von der auf dem Begleitbrief 18 enthaltenen Referenznummer 22.

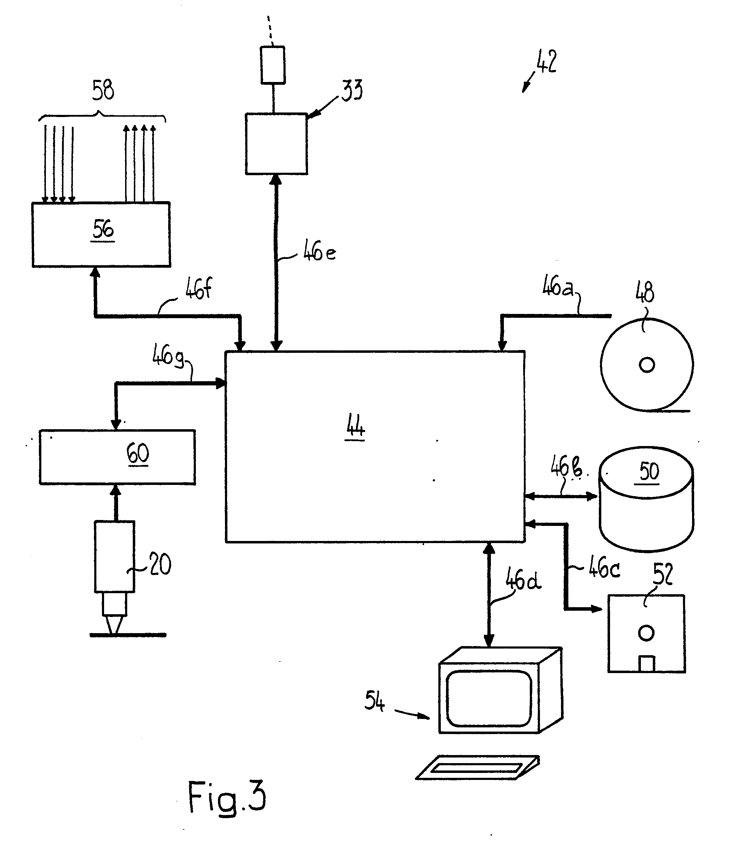

Die in den Fig. 1 und 2 gezeigte Vorrichtung wird von einer Steuereinheit 42 gesteuert, wie sie in der Fig. 3 dargestellt ist. Sie weist einen mit 44 bezeichneten und mit einem Rechteck schematisch angedeuteten Computer auf, welcher über mit dik-ken Pfeilen angedeutete Verbindungen 46a...46g mit verschiedenen Peripheriegeräten verbunden ist. Eine erste Verbindung 46a verbindet den Computer 44 mit einer schematisch angedeuteten Magnetbandstation 48. Auf dem Magnetband der Magnetbandstation 48 sind die personenbezogenen Einzeldaten gespeichert, welche auf die betreffenden Karten 32 (vgl. 1) aufzudrucken sind. Ueber eine weitere, mit 46b bezeichnete Verbindung ist der Computer 44 mit einer Harddiskstation 50 verbunden. In dieser sind Programme und temporäre Dateien gespeichert. Eine Floppy-Diskstation 52 ist über die Verbindung 46c mit dem Computer 44 verbunden. Auf der Floppydisk sind die Steuerungsparameter für den Tintenstrahldrucker 33 gespeichert. Weiter ist der Computer 44 mittels der Verbindung 46d mit einem Terminal 54 verbunden, das einen Bildschirm und eine Tastatur aufweist. Mit dem Terminal 54 können beispielsweise Parameter oder weitere Befehle dem Computer 44 übergeben werden. Ausserdem werden Statusmeldungen am Bildschirm des Terminals 54 dargestellt.

Durch die Verbindung 46e werden die den zu druckenden Zeichen entsprechenden Singale vom Computer 44 an den Tintenstrahldrucker 33 übermittelt (vgl. Fig. 1). Mit 56 ist ein Maschinen-Interface bezeichnet, welches über die Verbindung 46f mit dem Computer 44 verbunden ist. Mit 58 sind Verbindungsleitungen bezeichnet, welche vom Maschinen-Inferface 56 abgegebene Steuersignale dem Antrieb des Förderbandes 10, den beiden Zuführstationen 14, 28, der Klebstoffauftrageinrichtung 24 und eventuell weiteren Verarbeitungsstationen zuführen. Durch die Verbindungsleitungen 58 werden aber auch Rückmeldungen von diesen Verarbeitungsstationen an das Maschinen-Interface 56 geleitet.

Die Kamera 20 (s. Fig. 1) ist mit einer Bildauswerteeinheit 60 verbunden, welche über die Verbindung 46g ebenfalls mit dem Computer 44 verbunden ist. Durch diese Verbindung 46g werden Steuerbefehle an die Kamera 20 übermittelt und die den von der Kamera 20 gelesenen und von der Bildauswerteeinheit 60 ausgewerteten Referenznummern 22 entsprechenden Signale an den Computer 44 gemeldet.

Computer 44 mitsamt den in der Fig. 2 dargestellten und weiter oben beschriebenen Peripheriegeräten sowie deren Funktionsweise sind allgemein bekannt. Auf diese wird daher nicht mehr weiter eingegangen.

Die in den Fig. 1 und 2 dargestellte Bereitstellungsvorrichtung arbeitet im Zusammenhang mit der in der Fig. 3 dargestellten Steuereinheit 42 wie folgt. Auf dem För derband 10 sind die Begleitbriefe 18, 18a...18d in einem festen Abstand hintereinander angeordnet. Auch die Verarbeitungsstationen 14, 20, 24, 28 und 33 sind um das gleiche Mass voneinander beabstandet, so dass jeweils gleichzeitig an jeder Arbeitsstation ein Begleitbrief 18 bzw. eine Kreditkarte 32 bearbeitet wird. Für die weitere Beschreibung der Funktionsweise wird nun aber ein Begleitbrief 18 beim Durchlaufen von allen Verarbeitungsstationen 14, 20, 24, 28, 30 und 38 begleitet.

Auf ein Steuersignal vom Computer 44 wird an der Zuführstation 14 der unterste Begleitbrief 18 vom Stapel 16 abgezogen und auf das Förderband 10 abgelegt, mittels welchem der Begleitbrief 18 zur Kamera 20 transportiert wird. Von diesem mit 18a bezeichneten Begleitbrief wird die Referenznummer 22 abgelesen, in der Bildauswerteeinheit 60 ausgewertet und an den Computer 44 übermittelt. Dieser sucht aufgrund dieser Referenznummer 22 aus allen auf dem Magnetband der Magnetbandstation 48 gespeicherten Daten die personenbezogenen, der Referenznummer 22 zugehörigen Einzeldaten und übermittelt die diesen entsprechenden Signale zur gegebenen Zeit an den Tintenstrahldrucker 33.

Beim Weitertransport in Umlaufrichtung A gelangt der nun mit 18b bezeichnete Begleitbrief zur Klebstoffauftrageinrichtung 24, welche gesteuert vom Computer 44, den Streifen 26 aus Klebstoff aufträgt. An der zweiten Zuführstation 28 wird auf Befehl des Computers 44 vom Stapel 30 die unterste Karte 32 abgezogen und auf den nun mit 18c bezeichneten Begleitbrief im Bereich des Streifens 26 aus Klebstoff abgelegt. Diese Einheit aus Begleitbrief 18d und Karte 32 gelangt zum Tintenstrahldrucker 33, wo nun dieser die vom Computer 44 ermittelten personenbezogenen Einzeldaten 34 auf die Karte 32 aufdruckt. Es ist zu beachten, dass der Computer 44 den Datenfluss und die Ansteuerung des Förderbandes 10 und der Verarbeitungsstationen 14, 20, 24, 28, 30 derart koordiniert, dass die auf die Karte 32 aufgedruckten, personenbezogenen Einzeldaten 34 der jeweiligen Referenznummer 22, 22' zugeordnet sind. Als letzter Schritt wird die so fertige Versandeinheit 36 dem Sammeltrog 38 zur Stapelung zugeführt.

Es ist natürlich auch denkbar, dass anstelle des Sammeltroges 38 eine Maschine vorgesehen ist, die die fertigen Versandpakete 36 einzeln verpackt und, wenn noch nötig, adressiert. Die Referenznummern 22 können in Klarschrift, d.h. mit gedruckten oder geschriebenen Buchstaben von der Kamera 20 erfasst und in der Bildauswerteeinheit 60 ausgewertet werden. Es ist aber auch denkbar, dass die Referenznummern 22 von einem Code gebildet sind oder diese in magnetischer Form auf dem Begleitbrief 18 gespeichert sind. Im letzteren Fall wäre ein Magnetlesekopf für das Lesen der Referenznummern 22 notwendig.

Die Reihenfolge der Verarbeitungsstationen 14, 20, 24, 28, 33 muss nicht zwingend so sein, wie sie in den Fig. 1 und 2 dargestellt ist. So können beispielsweise die neutralen Karten 32 auf die Begleitbriefe 18 geklebt werden, bevor die Referenznummer 22 von der Kamera 20 gelesen wird. So wäre es auch denkbar, dass die neutralen Karten 32 bereits mit dem Begleitbrief 18 fest verbunden, an der ersten Zuführstation 14 dem Förderband 10 übergeben werden. Selbstverständlich würden dann die Klebstoffauftrageinrichtung 24 und die zweite Zuführstation 28 entfallen.

Die Verwendung der Vorrichtung ist nicht auf das Bereitstellen von versandbereiten Begleitbriefen 18 mit, mit personenbezogenen Einzeldaten 34 bedruckten Karten 32 beschränkt. So sind viele weitere Einsatzarten denkbar, bei welchen jeweils ab einem ersten Erzeugnis eine auf den Empfänger bezogene Information gelesen wird und auf ein zweites Erzeugnis personenbezogene Einzeldaten gedruckt werden müssen, welche aufgrund der gelesenen Information aus einer Vielzahl von Daten bestimmbar sind, wobei diese beiden Erzeugnisse jeweils miteinander verbunden zum Versand bereitgestellt werden. Selbstverständlich kann das erste Erzeugnis eine grosse Menge von Informationen aufweisen, welche aber mindestens zum Teil personenbezogen, nur für den Empfänger bestimmt oder diesem zugeordnet sind. Es ist auch denkbar, dass das erste Erzeugnis ein Abschnitt eines einzelnen Bogens ist, auf dessen zweiten Abschnitt die personenbezogenen Einzeldaten ausgedruckt werden.

Die beiden Erzeugnisse sind vorteilhafterweise lösbar miteinander verbunden. Sie müssen aber nicht zwingend miteinander verbunden sein. So ist es auch möglich, dass im Zuge der Verarbeitung beispielsweise das erste Erzeugnis gefaltet und das zweite mit Einzeldaten bedruckte Erzeugnis in dieses gefaltete erste Erzeugnis eingeführt wird.

Das eine Erzeugnis kann auch mittels einer Folie, welche am darunter liegenden andern Erzeugnis befestigt ist, festgehalten werden.

Anstelle des Tintenstrahldruckers 33 kann ein anderer Drucker vorgesehen sein. Dieser arbeitet vorzugsweise anschlagfrei, was vor allem dann erforderlich ist, wenn das zweite Erzeugnis (Karte 32) unterschiedliche Dicke aufweist.

Auf das weiter oben ausführlich beschriebene Ausführungsbeispiel gemäss den Fig. 1 bis 3 bezugnehmend ist zu bemerken, dass es auch denkbar ist, dass die empfängerspezifische, personenbezogene Information, z.B. die Referenznummer 22, ab der Karte 32 abgelesen werden kann, und der Begleitbrief 18 mit den empfängerspezifischen Einzeldaten 34 bedruckt wird. Bei einer solchen Ausführungsform wird die Karte vor dem Lesen auf den Begleitbrief aufgelegt. Dabei erfolgt die Verbindung zwischen Karte und Begleitbrief mittels einer Kunststoffolie, die über die Karte gelegt und mit dem Begleitbrief verbunden wird. Falls hiezu eine Klarsichtfolie verwendet wird, kann das Lesen der Karte auch erst anschliessend an das Befestigen der Karte erfolgen.

Anstelle von flächigen Karten 32 können auch dreidimensionale Erzeugnisse, wie Warenprobenbeutel, Münzen, Schlüssel, usw., mit personenbezogenen Einzeldaten beschriftet werden bzw. die personenbezogene Information kann ab solchen Erzeugnissen abgelesen werden.

Ferner ist es auch denkbar, mehrere Bogenteile zusammenzuführen und zu einer Broschüre zu binden. Dabei ist aber ein Bogenteil bereits mit den, dem jeweiligen EMPfänger zugeordneten Informationen versehen, z.B. bedruckt, und der zweite Bogenteil (und allenfalls weitere Bogenteile) wird mit personenbezogenen Einzeldaten bedruckt. Dieser Druckvorgang kann beispielsweise während dem Bindevorgang erfolgen.

## Ansprüche

1. Verfahren zum Bereitstellen von personenbezogenen Versandeinheiten (36), die mindestens zwei unterschiedliche, mit Informationen (22, 34) versehene Erzeugnisse (18, 32), insbesondere einen Begleitbrief und eine Beilage, aufweisen, bei dem von einem ersten Erzeugnis (18a) einem Empfänger zugeordnete Informationen (22) gelesen werden, aufgrund dieser Informationen (22) aus einer Vielzahl von in einer Steuereinheit (42) gespeicherten Daten personenbezogene, demselben Empfänger zugeordnete Einzeldaten (34) herausgesucht werden, die zumindest teilweise in ihrem Informationsgehalt von den Informationen (22) auf dem ersten Erzeugnis (18a) abweichen, ein zweites Erzeugnis (32) mit diesen Einzeldaten (34) bedruckt wird und die Erzeugnisse (18, 32) miteinander zum Versand bereitgestellt werden.

2. Verfahren nach Anspruch 1, dadurch gekennzeichnet, dass die beiden Erzeugnisse (18, 32) lösbar miteinander verbunden werden.

3. Verfahren nach Anspruch 2, dadurch gekennzeichnet, dass vor dem Bedrucken des zweiten Erzeugnisses (32) mit den Einzeldaten (34) die beiden Erzeugnisse (18, 32) miteinander verbunden werden.

4. Verfahren nach Anspruch 3, dadurch gekennzeichnet, dass zuerst vom ersten Erzeugnis (18) Informationen (22) gelesen werden und anschliessend die beiden Erzeugnisse (18, 32) miteinander verbunden werden.

5. Verfahren nach Anspruch 3, dadurch gekennzeichnet, dass die beiden Erzeugnisse (18, 32) vor dem Lesen von Informationen (22) ab dem ersten Erzeugnis (18a) miteinander verbunden werden.

6. Verfahren nach Anspruch 1, dadurch gekennzeichnet, dass die beiden Erzeugnisse (18, 32) miteinander verklebt werden.

7. Verfahren nach Anspruch 1, dadurch gekennzeichnet, dass die Einzeldaten (34) auf den einen, das zweite Erzeugnis (32) bildenden Abschnitt eines Bogens, dessen anderer Abschnitt das erste Erzeugnis (18) ist, gedruckt werden und dass vorzugsweise die beiden Abschnitte voneinander abtrennbar sind.

8. Verfahren nach Anspruch 1, dadurch gekennzeichnet, dass die Informationen (22) in Klarschrift ab dem ersten Erzeugnis (18) gelesen werden.

9. Verfahren nach Anspruch 1, dadurch gekennzeichnet, dass mindestens ein drittes Erzeugnis mit personenbezogenen Einzeldaten bedruckt wird, die sich gegebenenfalls von den auf das zweite Erzeugnis (18) aufzudruckenden Einzeldaten (34) unterscheiden.

10. Verfahren nach Anspruch 4, dadurch gekennzeichnet, dass das erste Erzeugnis vor dem Lesen der Information mit dem zweiten Erzeugnis zusammengebracht wird und das erste Erzeugnis mittels eines mit dem zweiten Erzeugnis verbundenen Deckelementes, z.B. einer Folie festgehalten wird.

11. Verfahren nach Anspruch 1, dadurch gekennzeichnet, dass das eine Erzeugnis ein Begleitbrief (18) und das andere Erzeugnis eine mit Einzeldaten (34) bedruckte Karte (32), insbesondere Kredit- oder Identifikationskarte, ist.

12. Vorrichtung zum Bereitstellen von personenbezogenen Versandeinheiten (36), die mindestens zwei unterschiedliche, mit Informationen (22, 34) versehene Erzeugnisse (18, 32), insbesondere einen Begleitbrief und eine Beilage aufweisen, mit einer Leseeinheit (20) zum Lesen von einem Empfänger zugeordneten Informationen (22) ab einem ersten Erzeugnis (18), einer an die Leseeinheit (20) angeschlossenen Steuereinheit (42), in der eine Vielzahl von Daten gespeichert sind, aus welchen aufgrund der von der Leseeinheit (20) gelesenen Informationen (22) personenbezogene, demselben Empfänger zugeordnete Einzeldaten (34) heraussuchbar sind, die zumindest teilweise in ihrem Informationsgehalt von den Informationen (22) auf dem ersten Erzeugnis (18a) abweichen, mit einer Druckeinheit (33) zum Bedrucken eines zweiten Erzeugnisses (32) mit den Einzeldaten (34) und mit Mitteln (24, 28) zum Bereitstellen dieser Erzeugnisse (18, 32) zum gemeinsamen Versand.

13. Vorrichtung nach Anspruch 12, dadurch gekennzeichnet, dass die Druckeinheit (33) einen anschlagfreien Drucker, insbesondere einen Tintenstrahldrucker, aufweist.

14. Vorrichtung nach Anspruch 12, dadurch gekennzeichnet, dass eine Fördereinrichtung (10) vorgesehen ist, entlang deren Förderweg eine Zuführeinrichtung (14) zum Zuführen mindestens des ersten Erzeugnisses (18) sowie die Lese- und Druckeinheit (29, 33) einander nachgeschaltet sind.

15. Vorrichtung nach Anspruch 14, dadurch gekennzeichnet, dass der Druckeinheit (33) eine weitere Zuführeinrichtung (28) zum Zuführen des zweiten Erzeugnisses (32) vorgeschaltet ist.

16. Vorrichtung nach Anspruch 15, dadurch gekennzeichnet, dass der weiteren Zuführeinrichtung (28) eine Einrichtung (24) zum Auftragen von Klebstoff (26) auf das erste Erzeugnis (18) vorgeschaltet ist, und das zweite Erzeugnis (32) mittels dieser Zuführeinrichtung (28) mit dem Klebstoffauftrag (26) auf dem ersten Erzeugnis (18) zusammenführbar ist.

17. Vorrichtung nach Anspruch 14, gekennzeichnet durch eine einzige Zuführeinrichtung (14) zum Zuführen von Bogen, die die Erzeugnisse (18, 32) bildende Abschnitte aufweisen, die vorzugsweise voneinander trennbar sind.

18. Vorrichtung nach Anspruch 12, gekennzeichnet durch eine Klarschrift-Leseeinrichtung (20).

19. Vorrichtung nach Anspruch 12, dadurch gekennzeichnet, dass mindestens eine weitere Druckeinheit zum Bedrucken wenigstens eines weiteren Erzeugnisses mit personenbezogenen Einzeldaten vorgesehen ist, wobei gegebenenfalls diese Einzeldaten sich von den auf das zweite Erzeugnis (18) aufzudruckenden Einzeldaten (34) unterscheiden.

20. Vorrichtung nach Anspruch 12, dadurch gekennzeichnet, dass mindestens ein Erzeugnis (18) flächig ist.

21. Vorrichtung nach Anspruch 14, dadurch gekennzeichnet, dass der Zuführeinrichtung für das erste Erzeugnis eine zweite Zuführeinrichtung für das zweite Erzeugnis vorgeschaltet ist und dass zwischen Lese- und Druckeinheit eine Arbeitsstation zum Aufbringen eines das erste Erzeugnis überdeckenden Deckelementes, z.B. einer Folie, auf das zweite Erzeugnis angeordnet ist.

22. Vorrichtung nach Anspruch 12, dadurch gekennzeichnet, das ein Erzeugnis ein Begleitbrief (18) und das andere Erzeugnis eine mit Einzeldaten (34) bedruckte Karte (32), insbesondere Kredit- oder Identifikationskarte, ist.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3303109 (PAULY MANFRED)<br>* Seite 5, Zeile 7 - Zeile 18; Ansprüche 1-5; Figur 1 *<br>* Seite 6, Zeile 6 - Seite 9, Zeile 23 * | 1, 12, 13, 20 | G06K17/00<br>B42B7/00<br>B65H37/04 |
| Y | | 2, 6, 8, 9, 11, 14-16, 18, 21 | |
| Y | | 22 | |
| A | | 3-5, 7, 10, 17 | |
| | --- | | |
| X | US-A-4065661 (JOERG JASKOWSKY)<br>* Zusammenfassung; Ansprüche 1-5; Figuren 1, 2 *<br>* Spalte 3, Zeile 14 - Spalte 4, Zeile 9 * | 12, 19, 20 | |
| Y | | 9 | |
| A | | 13, 17 | |
| | --- | | |
| X | DE-A-2526639 (RICHARD HAAG & SOHN GMBH & CO KG)<br>* Seite 5, Zeile 1 - Seite 7, Zeile 12; Ansprüche 1-5; Figur 1 * | 12, 20 | |
| | --- | | RECHERCHIERTE SACHGEBIETE (Int. Cl.4) |
| Y | DE-A-3734536 (GA-VEHREN ENGINEERING CO.)<br>* Zusammenfassung; Ansprüche 1, 12-20; Figuren 1, 3 *<br><br>* Spalte 3, Zeile 61 - Spalte 4, Zeile 42 *<br>* Spalte 6, Zeile 23 - Spalte 7, Zeile 21 * | 2, 6, 11, 14-16, 21, 22 | B42B<br>G06K<br>B42C<br>B65H |
| A | | 3-5 | |
| | --- | | |
| Y | DE-A-2932000 (SUHRMANN WOLFGANG)<br>* Seite 11, Zeile 4 - Seite 12, Zeile 24; Ansprüche 1, 4-6, 9-13; Figuren 1, 2 * | 8, 18 | |
| | --- | | |
| Y | EP-A-0005267 (HEINZ BECK, KUNSTSTOFFVERARBEITUNG GMBH)<br>* Zusammenfassung; Anspruch 1; Figur 1 * | 21 | |
| A | | 10 | |
| | --- | | |
| | | ../-- | |

Der vorliegende Recherchenbericht wurde für alle Patentansprüche erstellt

| Recherchenort | Abschlußdatum der Recherche | Prüfer |
|---|---|---|
| DEN HAAG | 07 AUGUST 1989 | GREINER E.F. |

Europäisches
Patentamt

EUROPÄISCHER RECHERCHENBERICHT

Nummer der Anmeldung

EP    89 10 7835
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4529871 (BRIAN Y. DAVIDSON) * Zusammenfassung; Ansprüche 1-3; Figuren 1, 2, 5-16 * ----- | 1-22 | |

RECHERCHIERTE
SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 07 AUGUST 1989 | GREINER E.F. |